# EUROPEAN PATENT SPECIFICATION

(11) **EP 3 866 296 B1**
(45) Date of publication and mention of the grant of the patent: **30.03.2022**
(21) Application number: 20157577.6
(22) Date of filing: 17.02.2020
(51) Int. Cl.: H02J 7/00, A47K 13/00, H02J 50/00

(54) **WIRELESS POWER SUPPLY AND ELECTRIC CONTROL SYSTEM FOR TOILET SEAT COVER**
DRAHTLOSE STROMVERSORGUNG UND ELEKTRISCHES STEUERUNGSSYSTEM FÜR TOILETTENSITZABDECKUNG
SYSTÈME D'ALIMENTATION SANS FIL ET DE COMMANDE ÉLECTRIQUE POUR COUVERCLE DE SIÈGE DE TOILETTES

(43) Date of publication of application: 18.08.2021
(73) Proprietor: Purity (Xiamen) Sanitary Ware Co., Ltd., Xiamen City, Fujian 361100 (CN)
(72) Inventor: WU, James, 434 Taichung City (TW); WU, Alex, 434 Taichung City (TW); YANG, Ce-Wen, Xiamen City, Fujian (CN)
(74) Representative: Geurts, Franciscus Antonius

(56) References cited:
- US-A1- 2019 038 090
- US-A1- 2019 208 969

## Description

### BACKGROUND OF THE INVENTION

### 1. Technical Field

The present invention relates generally to a toilet seat cover, and more particularly to a wireless power supply and electric control system for a toilet seat cover.

### 2. Description of Related Art

With the advancement of technology, modern people pay much attention to the quality of life and health. For example, office workers have to maintain a sedentary posture over a long period so that many of them are suffering from hemorrhoids. Therefore, bidet toilets are more and more common in domestic toilets to facilitate users to washing their anuses after defecation.

Additionally, bidet toilets also facilitate female users to clean their intimate part to reduce the chance of urinary tract infections.

Besides, in higher latitude countries or regions, due to the cold climate, residents usually add extra cushions on the toilet seat to keep them warm. However, when flushing, the water could be splashed out of the toilet, causing the cushion to be dirty so it would be difficult to maintain hygiene. In view of this, electric heated toilet seats have been developed. With an electric heating device combined with the toilet seat, a user can sit directly on the warm toilet seat, and it's convenient for cleaning and maintaining hygiene.

Both the bidet toilet seat and the electric heated toilet seat have an exposed plug put in the socket to supply power to the toilet seat. Nevertheless, if water leaks while the toilet is being cleaned, the exposed plug or external wire may cause electric leakage which could let users get an electric shock unexpectedly and even be life-threatening.

From the above, the present toilet seats with exposed plugs or external wires still need to be improved.

US 2019/038090 A1 and US 2019/208969 A1 disclose toilet seat assemblies with electric power sources for the control units, actuators, sensors, etc. within.

### BRIEF SUMMARY OF THE INVENTION

In view of the above, the primary objective of the present invention is to provide a wireless power supply and electric control system for a toilet seat cover, which supplies power to electric devices in the toilet seat cover with a direct current power supply device rather than an exposed plug or external wire, which prevents users from getting an electric shock.

The invention is defined by the appended independent claim. Preferred embodiments are defined by the appended dependent claims.

### BRIEF DESCRIPTION OF THE SEVERAL VIEWS OF THE DRAWINGS

The present invention will be best understood by referring to the following detailed description of some illustrative embodiments in conjunction with the accompanying drawings, in which
FIG. 1 is a block diagram of the wireless power supply and electric control system for a toilet seat cover of the first preferred embodiment of the present invention;
FIG. 2 is a block diagram of the wireless charging system for a toilet seat cover of the first embodiment;
FIG. 3 is a block diagram of the power transmission module system for a toilet seat cover of the first embodiment;
FIG. 4 is a block diagram of the electric control system for a toilet seat cover of the first preferred embodiment;
FIG. 5 is a top view of the toilet seat cover of the first embodiment;
FIG. 6 is a partial sectional view of the toilet seat cover of the first embodiment;
FIG. 7 is another partial sectional view of the toilet seat cover of the first embodiment;
FIG. 8 is a schematic diagram showing the toilet seat cover of the first embodiment being charged in the lifted state; and
FIG. 9 is a schematic diagram showing the toilet seat cover of the second embodiment being charged in the closed state.

### DETAILED DESCRIPTION OF THE INVENTION

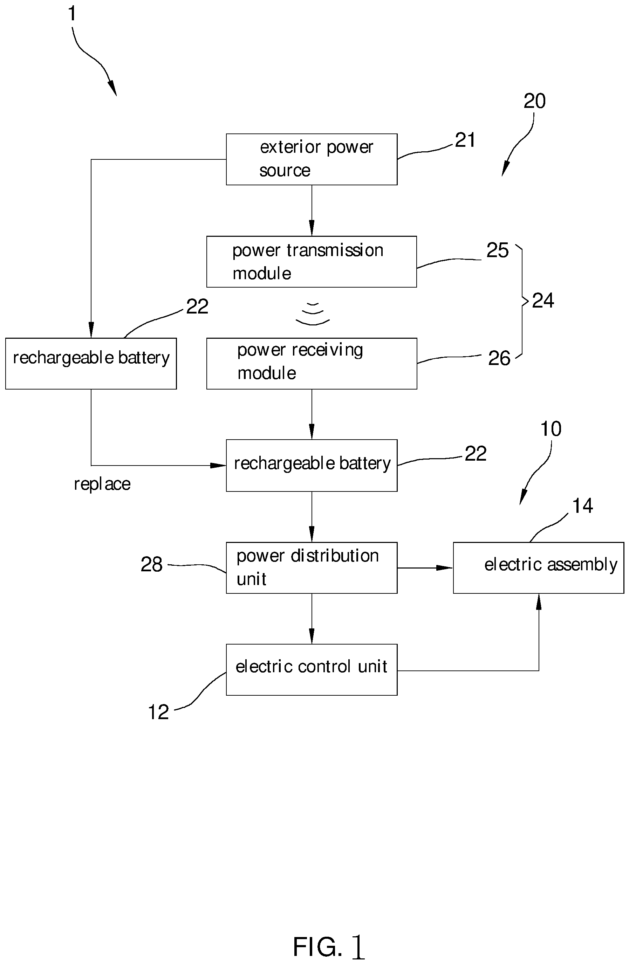

As shown in FIG. 1, a wireless power supply and electric control system for a toilet seat cover 1, the first embodiment of the present invention, includes a seat cover assembly 5, an electric device 10, and a direct current power supply device 20.

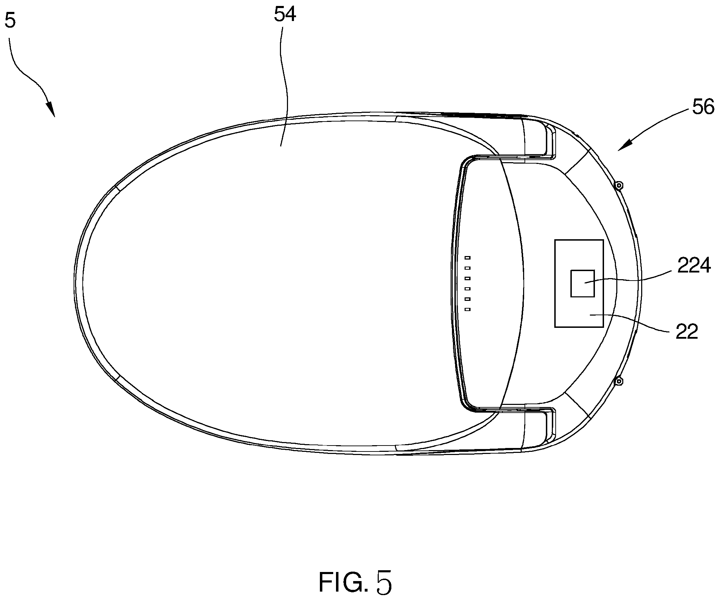

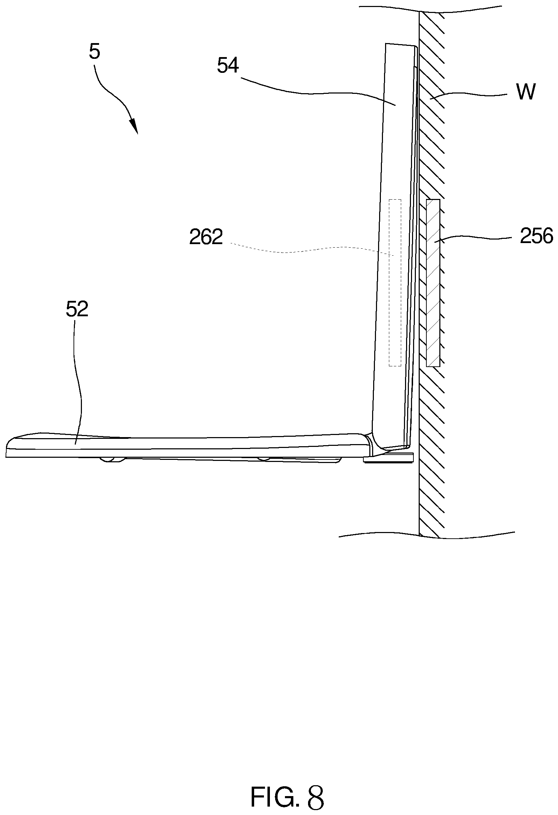

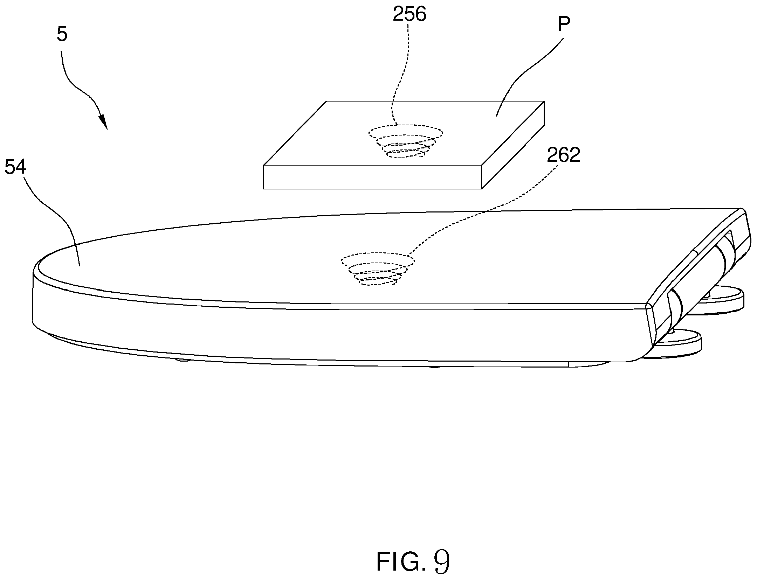

As illustrated in FIG. 5, the seat cover assembly 5 includes a seat 52 and a cover 54, wherein the cover 54 is controllable to move pivotally relative to the seat 52, so that the cover 54 can be in a closed state (as shown in FIG. 9) or a lifted state (as shown in FIG. 8) relative to the seat 52.

As illustrated in FIG. 9, when the cover 54 is in the closed state relative to the seat 52, the cover 54 covers the seat 52. As illustrated in FIG. 8, when the cover 54 is in the lifted state relative to the seat 52, the cover 54 doesn't cover the seat 52 so that the seat 52 is exposed.

The electric device 10 is provided in the seat cover assembly 5, and includes an electric control unit 12 and at least an electric assembly 14. The electric control unit 12 transmits electrical control signal to the electric assembly 14 to actuate the electric assembly 14.

The direct current power supply device 20 is provided in the seat cover assembly 5, and is electrically connected to the electric device 10. The direct current power supply device 20 includes at least a rechargeable battery 22 which supplies power to the electric device 10 for operation. In this embodiment, the rechargeable battery 22 can be fixed in the seat cover assembly 5. In this embodiment, the rechargeable battery 22 is detachably provided in the seat cover assembly 5.

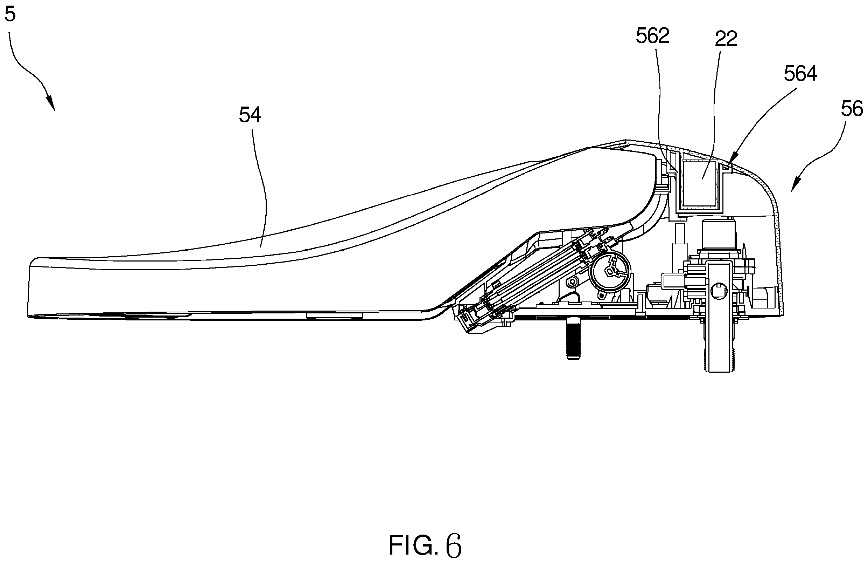

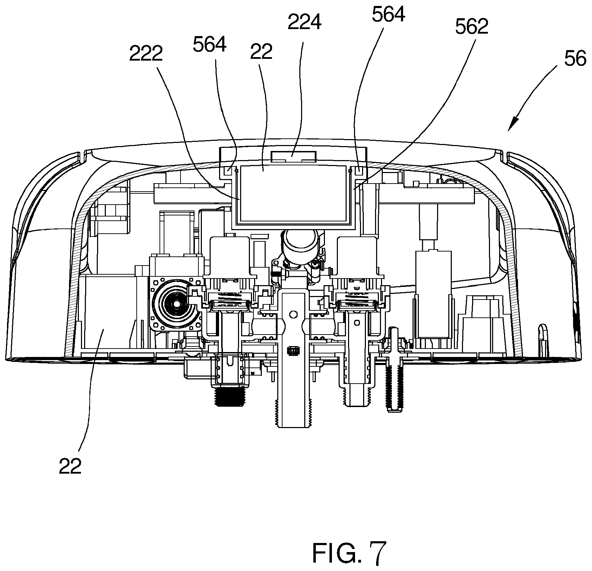

Referring to FIG. 6 and FIG. 7, FIG. 6 is a partial sectional view of the toilet seat cover of the first embodiment, while FIG. 7 is another partial sectional view of the toilet seat cover of the first embodiment. As shown in FIG. 6 and FIG. 7, the seat cover assembly 5 includes a cover main body 56, and the number of the rechargeable battery 22 is two. One of the two rechargeable batteries 22 is fixed in the cover main body 56, while the other rechargeable battery 22 is detachably provided in the cover main body 56.

In this embodiment, the cover main body 56 has a battery compartment 562 for accommodating the rechargeable battery 22, so that the rechargeable battery 22 can be detachably installed in the battery compartment 562. In this embodiment, the rechargeable battery 22 has a drawing groove 224 on the top surface thereof, which facilitates users to pull out the rechargeable battery 22 from the battery compartment 562 and replace the rechargeable battery 22. In this embodiment, the battery compartment 562 has a drainage groove 564 provided around the top edge of the battery compartment 562 to prevent water from entering the battery compartment 562, which causes electric leakage. In this embodiment, the rechargeable battery 22 includes a waterproof ring 222 provided around the outer surface thereof. When the rechargeable battery 22 is installed in the battery compartment 562, the waterproof ring 222 is sandwiched between the outer surface of the rechargeable battery 22 and the inner wall of the battery compartment 562.

As shown in FIG. 1, the direct current power supply device 20 includes a wireless charging member 24 which includes a power transmission module 25 and a power receiving module 26, wherein the power transmission module 25 and the power receiving module 26 are connected through electromagnetic signal. When the power transmission module 25 is electrically connected to an exterior power source 21, the power transmission module 25 transmits an electromagnetic signal to the power receiving module 26. The power receiving module 26 is electrically connected to the rechargeable battery 22 for charging the rechargeable battery 22. As shown in FIG. 1, the rechargeable battery 22 can also be detached from the direct current power supply device 20 and replaced. That is, when the power of the rechargeable battery 22 in the direct current power supply device 20 is low, it can be replaced by another rechargeable battery 22 that is fully-charged, so that the wireless power supply and electric control system for a toilet seat cover 1 can work normally.

As shown in FIG. 1, the direct current power supply device 20 includes a power distribution unit 28 which is electrically connected to the electric control unit 12 and the electric assembly 14 of the electric device 10 so as to supply the electric control unit 12 and the electric assembly 14 direct current.

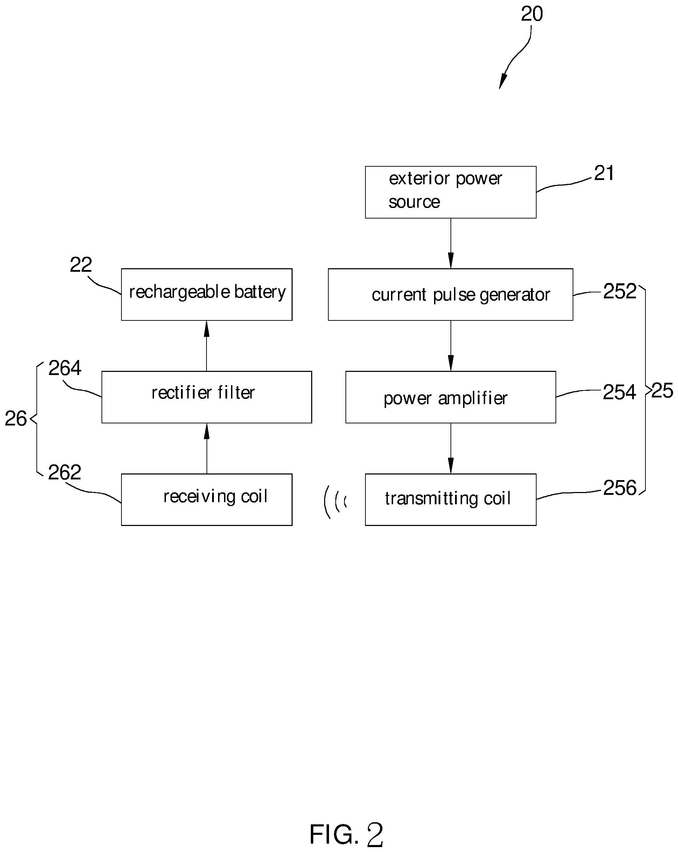

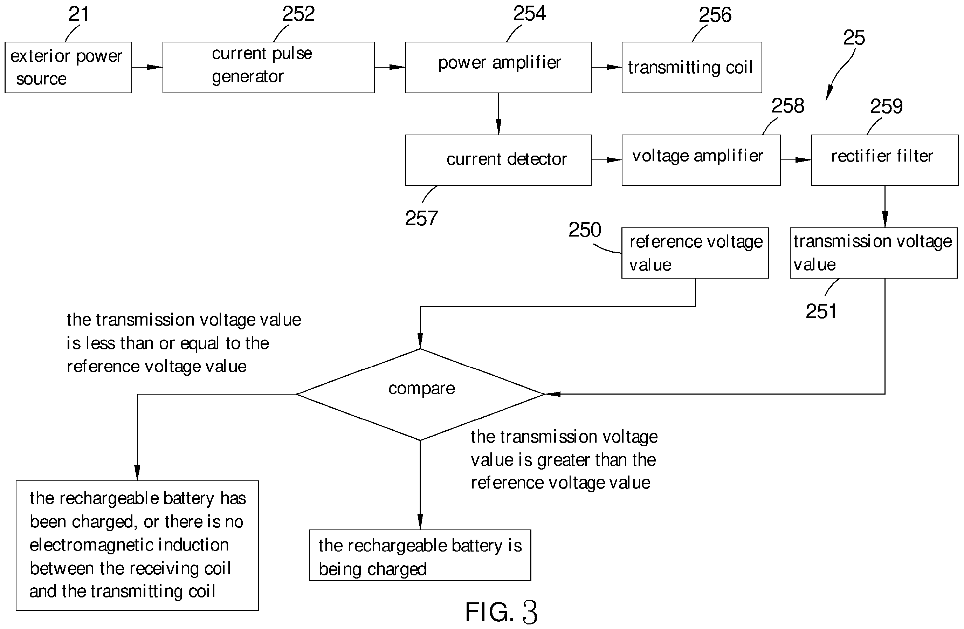

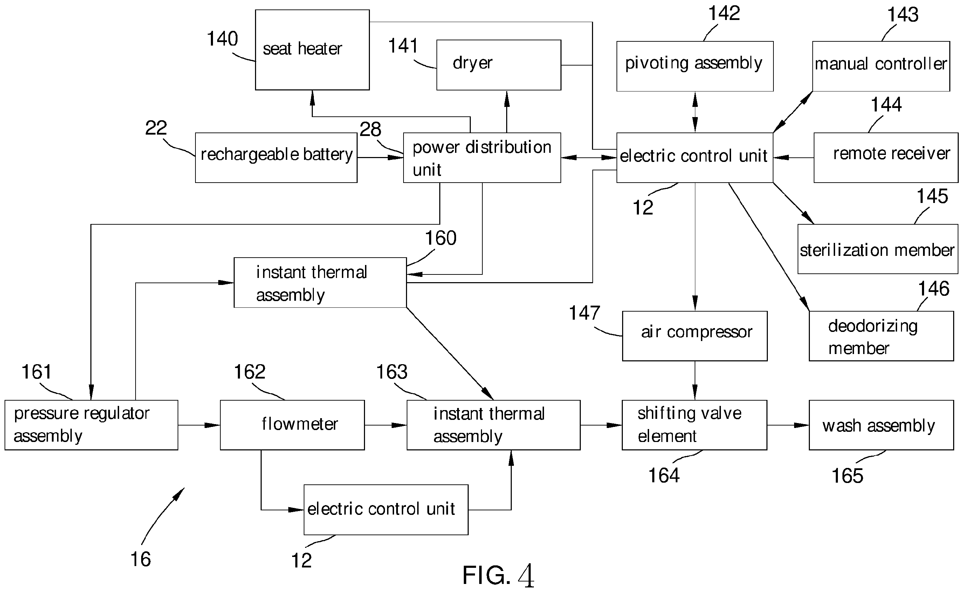

Referring to FIG. 2 to FIG. 4, FIG. 2 is a block diagram of the wireless charging system for a toilet seat cover of the first embodiment; FIG. 3 is a block diagram of the power transmission module system for a toilet seat cover of the first embodiment; FIG. 4 is a block diagram of the electric control system for a toilet seat cover of the first preferred embodiment.

As shown in FIG. 2, the power transmission module 25 includes a current pulse generator 252, a power amplifier 254, and a transmitting coil 256. During the exterior power source 21 supplies direct current to the power transmission module 25, the direct current passes through the current pulse generator 252, the power amplifier 254, and the transmitting coil 256 in sequence, which makes the transmitting coil 256 generate a magnetic field. The power receiving module 26 includes a receiving coil 262 and a rectifier filter 264. When the transmitting coil 256 generates a magnetic field, and when the receiving coil 262 approaches the transmitting coil 256, the receiving coil 262 generates induced current which passes through the rectifier filter 264 and then supplies power to the rechargeable battery 22.

In this embodiment, the transmitting coil 256 is provided in the wall W, while the receiving coil 262 is provided in the cover 54 of the seat cover assembly 5. When the cover 54 is in the lifted state relative to the seat 52, the receiving coil 262 and the transmitting coil 256 are close to each other, which makes the receiving coil 262 generate induced current to charge the rechargeable battery 22 as shown in FIG. 8.

In the second embodiment, the transmitting coil 256 is provided in a portable wireless charging device P, while the receiving coil 262 is provided in the cover 54 of the seat cover assembly 5. When the cover 54 is in the closed state relative to the seat 52, the portable wireless charging device P can be put on the cover 54, making the receiving coil 262 and the transmitting coil 256 close to each other to generate induced current, which charges the rechargeable battery 22 as shown in FIG. 9.

As shown in FIG. 3, the power transmission module 25 includes a current detector 257, a voltage amplifier 258, and a rectifier filter 259. The direct current which passes through the transmitting coil 256 will pass through the current detector 257 in parallel, and then pass through the voltage amplifier 258, and the rectifier filter 259 sequentially, and finally, a transmission voltage value 251 is obtained. In this embodiment, the transmission voltage value 251 will be compared with a reference voltage value 250 to determine whether the direct current power supply device 20 is going to charge the rechargeable battery 22.

If the transmission voltage value 251 is greater than the reference voltage value 250, the rechargeable battery 22 is being charged. On the other hand, if the transmission voltage value 251 is less than or equal to the reference voltage value 250, the rechargeable battery 22 has been charged, or, there is no electromagnetic induction between the receiving coil 262 and the transmitting coil 256. In this embodiment, if the transmission voltage value 251 is less than or equal to the reference voltage value 250, the power transmission module 25 automatically cuts off the current.

In this embodiment, the power transmission module 25 includes a pilot light (not shown). If the transmission voltage value 251 is greater than the reference voltage value 250, the pilot light shows a first light signal. By contrast, if the transmission voltage value 251 is less than or equal to the reference voltage value 250, the pilot light shows a second light signal which is different from the first light signal. For example, the first light signal can be flashing red light representing the rechargeable battery 22 is being charged, while the second light signal can be constant green light representing the rechargeable battery 22 has been charged. Practically, the pilot light is able to show a third light signal. For example, if there is no electromagnetic induction between the receiving coil 262 and the transmitting coil 256, that is, if the rechargeable battery 22 has not been charged, the third light signal can be constant yellow light.

As shown in FIG. 4, the electric assembly 14 includes a seat heater 140, a dryer 141, a pivoting assembly 142, a manual controller 143, a remote receiver 144, a sterilization member 145, a deodorizing member 146, an air compressor 147, or a combination of the above. For example, the seat heater 140 includes a cover, a heater, a temperature sensor, a thermal fuse, a human body detector, and the seat, wherein the main function of the seat heater 140 is to heat the seat 52. The human body detector is provided to ensure that a wash switch will not be activated before it detects a user is seated on the seat, which can avoid the danger of continuous heating and excessive high temperature seat caused by wrongly pressing the switch. The dryer 141 is mainly composed of a blower, a heater, a temperature sensor and an air duct cover; the main function of the dryer 141 is to keep the toilet seat cover dry to prevent germs and mold from breeding through electrifying the heater, and with hot air generated by the blower. The pivoting assembly 142 is provided at the pivot of the cover 54 and the seat 52 to control the cover 54 to be in the lifted state or the closed state relative to the seat 52 with electric control method. The manual controller 143 consists of buttons and status displaying LEDs, and users can select operation mode according to their needs, such as start-up, hip washing, or female intimate part cleaning. The remote receiver 144 can cooperate with a remote control to provide remote monitoring function, such as seat pre-warming and disinfection. The sterilization member 145 includes a UV LED light to sterilize the seat. The deodorizing member 146 mainly consists of air purification materials (e.g., activated carbon and cold catalyst) and a draught fan so as to eliminate the odor after the toilet is used by the purification materials, and to provide an odorless toilet. The air compressor 147 is provided mainly for compressing air to control a shifting valve element 164 to shift washing functions provided by a washing device 16 to users, such as hip washing, female intimate part cleaning, or automatic disinfection and cleaning to a wash assembly 165.

As shown in FIG. 4, the wireless power supply and electric control system for a toilet seat cover 1 includes the washing device 16 which is provided in the seat 52. The washing device 16 includes a pressure regulator assembly 161, a flowmeter 162, an instant thermal assembly 163, the shifting valve element 164, and the wash assembly 165. The shifting valve element 164 is provided to shift washing functions provided by the washing device 16 to users.

In this embodiment, the pressure regulator assembly 161 includes a connector, an electromagnetic valve, and a pressure regulator. The connector is provided to connect a water inlet pipe and the pressure regulator; the electromagnetic valve is provided to control the water flow in the washing device; the pressure regulator is provided to keep the water output pressure in the washing device stable.

In this embodiment, the flowmeter 162 is provided to monitor the water flow in the washing device 16, and transmit the monitoring results to the electric control unit 12. According to the monitoring results, the electric control unit 12 controls the instant thermal assembly 163 to heat the water in the washing device 16.

In this embodiment, the instant thermal assembly 163 includes a heater, a temperature control switch, a temperature sensor, and a water level switch. The heater heats the water in the washing device 16 to make the water reach a preset temperature, while the temperature control switch controls the temperature of the water in the washing device 16. The temperature sensor monitors the temperature of the water in the washing device 16, and sends it to the electric control unit 12; the electric control unit 12 controls the temperature control switch and the heater to turn on or turn off. If the water temperature is higher than the preset temperature, the temperature control switch blocks the power to the heater, and the water level switch is provided to avoid the heater from dry heating. In this embodiment, the heater is a positive temperature coefficient (PTC) thermistor heater.

In this embodiment, the instant thermal assembly 163 includes an instant thermal control board 160 which is provided to control the heating time and power of the heater to the water in the washing device 16, as well as to control the temperature of the water in the washing device 16. Specifically, the temperature sensor collects water temperature data in the washing device 16 and sends control signal to the instant thermal control board 160, and then the instant thermal control board 160 controls a heating pipe to make the water in the washing device 16 reach the preset temperature.

In this embodiment, the wash assembly 165 includes a motor, a gear train, and a nozzle group. The motor drives the gear train which meshes with racks in the nozzle group to make the nozzle group controllably move back and forth. The water in the washing device 16 is sprayed out by the nozzle group for providing users a wash function. The motor is electrically connected to the direct current power supply device 20 and the electric control unit 12 which controls the operation of the motor.

By the abovementioned design, the wireless power supply and electric control system for a toilet seat cover uses the direct current power supply device to supply power to the electric device of the toilet seat cover directly rather than using an exposed plug or external wire, which could let users get an electric shock. Besides, using the rechargeable battery as the resource of direct current for the direct current power supply device makes the toilet seat cover beautiful and clean, which improves the quality and brings the toilet seat cover a sense of design.

The embodiments described above are only preferred embodiments of the present invention. All equivalent structures which employ the concepts disclosed in this specification and the appended claims should fall within the scope of the present invention.

## Claims

1. A wireless power supply and electric control system for a toilet seat cover (1) comprising:
a seat cover assembly (5) comprising a seat (52) and a cover (54) which is controllable to move pivotally relative to the seat (52) so that the cover (54) is in a closed state or a lifted state relative to the seat (52), wherein when the cover (54) is in the closed state relative to the seat (52), the cover (54) covers the seat (52), while when the cover (54) is in the lifted state relative to the seat (52), the cover (54) doesn't cover the seat (52) so that the seat (52) is exposed;
an electric device (10) which is provided in the seat cover assembly (5), wherein the electric device (10) comprises an electric control unit (12) and at least one electric assembly (14); the electric control unit (12) is adapted to transmit an electrical control signal to the at least one electric assembly (14) to actuate the at least one electric assembly (14); and
a direct current power supply device (20) which is provided in the seat cover assembly (5) and is electrically connected to the electric device (10), wherein the direct current power supply device (20) comprises at least one rechargeable battery (22) which is adapted to supply power to the electric device (10) for operation;
wherein the seat cover assembly (5) comprises a cover main body (56), and the at least one rechargeable battery (22) is detachably provided in the cover main body (56);
wherein the cover main body (56) comprises a battery compartment (562) for accommodating the at least one rechargeable battery (22) so that the at least one rechargeable battery (22) is detachably installed in the battery compartment (562);
wherein the at least one rechargeable battery (22) comprises a waterproof ring (222) provided around an outer surface of the at least one rechargeable battery (22); when the at least one rechargeable battery (22) is installed in the battery compartment (562), the waterproof ring (222) is sandwiched between the outer surface of the at least one rechargeable battery (22) and an inner wall of the battery compartment (562).

2. The wireless power supply and electric control system (1) of claim 1, wherein the battery compartment (562) has a drainage groove (564) provided around a top edge of the battery compartment (562) to prevent water from entering the battery compartment (562).

3. The wireless power supply and electric control system (1) of claim 1, wherein the direct current power supply device (20) comprises a wireless charging member (24) which comprises a power transmission module (25) and a power receiving module (26); the power transmission module (25) and the power receiving module (26) are connected through electromagnetic signal; when the power transmission module (25) is electrically connected to an exterior power source (21), the power transmission module (25) is adapted to transmit an electromagnetic signal to the power receiving module (26); the power receiving module (26) is electrically connected to the at least a rechargeable battery (22) for charging the at least a rechargeable battery (22).

4. The wireless power supply and electric control system (1) of claim 3, wherein the power transmission module (25) comprises a current pulse generator (252), a power amplifier (254), and a transmitting coil (256); during the exterior power source (21) supplies a direct current to the power transmission module (25), the direct current passes through the current pulse generator (252), the power amplifier (254), and the transmitting coil (256) in sequence, which makes the transmitting coil (256) generate a magnetic field; the power receiving module (26) comprises a receiving coil (262) and a rectifier filter (264); when the transmitting coil (256) generates the magnetic field, and when the receiving coil (262) approaches the transmitting coil (256), the receiving coil (262) generates an induced current which passes through the rectifier filter (264) and then supplies power to the at least a rechargeable battery (22).

5. The wireless power supply and electric control system (1) of claim 4, wherein power transmission module (25) comprises a current detector (257), a voltage amplifier (258), and a rectifier filter (259); the direct current which passes through the transmitting coil (256) passes through the current detector (257) in parallel, and then passes through the voltage amplifier (258) and the rectifier filter (259) sequentially, and finally a transmission voltage value is obtained; if the transmission voltage value is greater than a reference voltage value, the at least a rechargeable battery (22) is being charged; if the transmission voltage value is less than or equal to the reference voltage value, the at least a rechargeable battery (22) has been charged, or, there is no electromagnetic induction between the receiving coil (262) and the transmitting coil (256).

6. The wireless power supply and electric control system (1) of claim 5, wherein if the transmission voltage value is less than or equal to the reference voltage value, the power transmission module (25) automatically cuts off current.

7. The wireless power supply and electric control system (1) of claim 5, wherein the power transmission module (25) comprises a pilot light; if the transmission voltage value is greater than the reference voltage value, the pilot light shows a first light signal; if the transmission voltage value is less than or equal to the reference voltage value, the pilot light shows a second light signal which is different from the first light signal.

8. The wireless power supply and electric control system (1) of claim 4, wherein the transmitting coil (256) is provided in a wall (W), while the receiving coil (262) is provided in the cover (54) of the seat cover assembly (5); when the cover (54) is in the lifted state relative to the seat (52), the receiving coil (262) and the transmitting coil (256) are close to each other, which makes the receiving coil (262) generate the induced current to charge the at least a rechargeable battery (22).

9. The wireless power supply and electric control system (1) of claim 4, wherein the transmitting coil (256) is provided in a portable wireless charging device (P), while the receiving coil (262) is provided in the cover (54) of the seat cover assembly (5); when the cover (54) is in the closed state relative to the seat (52), the portable wireless charging device (P) can be put on the cover (54), making the receiving coil (262) and the transmitting coil (256) close to each other to generate the induced current, which charges the at least a rechargeable battery (22).

10. The wireless power supply and electric control system (1) of claim 1, wherein the direct current power supply device (20) comprises a power distribution unit (28) which is electrically connected to the electric control unit (12) and the at least an electric assembly (14) of the electric device (10) for supplying direct current to the electric control unit (12) and the at least an electric assembly (14).

## Patentansprüche

1. Ein drahtloses Leistungsversorgungs- und elektronisches Steuersystem für eine Toilettensitzabdeckung (1), das folgende Merkmale aufweist:
eine Sitzabdeckungsanordnung (5), die einen Sitz (52) und eine Abdeckung (54) aufweist, die dahin gehend steuerbar ist, sich relativ zu dem Sitz (52) drehend zu bewegen, so dass sich die Abdeckung (54) relativ zu dem Sitz (52) in einem geschlossenen Zustand oder einem angehobenen Zustand befindet, wobei die Abdeckung (54) dann, wenn sich die Abdeckung (54) relativ zu dem Sitz (52) in dem geschlossenen Zustand befindet, den Sitz (52) abdeckt, wohingegen die Abdeckung (54) dann, wenn sich die Abdeckung (54) relativ zu dem Sitz (52) in dem angehobenen Zustand befindet, den Sitz (52) nicht abdeckt, so dass der Sitz (52) frei liegt;
eine elektrische Vorrichtung (10), die in der Sitzabdeckungsanordnung (5) vorgesehen ist, wobei die elektrische Vorrichtung (10) eine elektrische Steuereinheit (12) und zumindest eine elektrische Anordnung (14) aufweist; die elektrische Steuereinheit (12) dazu angepasst ist, ein elektrisches Steuersignal an die zumindest eine elektrische Anordnung (14) zu senden, um die zumindest eine elektrische Anordnung (14) zu betätigen; und
eine Gleichstrom-Leistungsversorgungsvorrichtung (20), die in der Sitzabdeckungsanordnung (5) vorgesehen und mit der elektrischen Vorrichtung (10) elektrisch verbunden ist, wobei die Gleichstrom-Leistungsversorgungsvorrichtung (20) zumindest eine wiederaufladbare Batterie (22) aufweist, die dazu angepasst ist, der elektrischen Vorrichtung (10) für deren Betrieb Leistung zuzuführen;
wobei die Sitzabdeckungsanordnung (5) einen Abdeckungshauptkörper (56) aufweist und die zumindest eine wiederaufladbare Batterie (22) lösbar in dem Abdeckungshauptkörper (56) vorgesehen ist;
wobei der Abdeckungshauptkörper (56) ein Batteriefach (562) zum Unterbringen der zumindest einen wiederaufladbaren Batterie (22) aufweist, so dass die zumindest eine wiederaufladbare Batterie (22) lösbar in dem Batteriefach (562) installiert ist;
wobei die zumindest eine wiederaufladbare Batterie (22) einen um eine Außenoberfläche der zumindest einen wiederaufladbaren Batterie (22) herum vorgesehenen wasserdichten Ring (222) aufweist; wenn die zumindest eine wiederaufladbare Batterie (22) in dem Batteriefach (562) installiert ist, befindet sich der wasserdichte Ring (222) sandwichartig zwischen der Außenoberfläche der zumindest einen wiederaufladbaren Batterie und einer Innenwand des Batteriefachs (562).

2. Das drahtlose Leistungsversorgungs- und elektrische Steuersystem (1) gemäß Anspruch 1, bei dem das Batteriefach (562) eine um einen oberen Rand des Batteriefachs (562) herum vorgesehene Abflussrille (564) aufweist, um zu verhindern, dass Wasser in das Batteriefach (562) eintritt.

3. Das drahtlose Leistungsversorgungs- und elektrische Steuersystem (1) gemäß Anspruch 1, bei dem die Gleichstrom-Leistungsversorgungsvorrichtung (20) ein drahtloses Ladebauglied (24) aufweist, das ein Leistungsübertragungsmodul (25) und ein Leistungsempfangsmodul (26) aufweist; das Leistungsübertragungsmodul (25) und das Leistungsempfangsmodul (26) durch ein elektromagnetisches Signal verbunden sind; wenn das Leistungsübertragungsmodul (25) elektrisch mit einer externen Leistungsquelle (21) verbunden ist, ist das Leistungsübertragungsmodul (25) dazu angepasst, ein elektromagnetisches Signal an das Leistungsempfangsmodul (26) zu übertragen; das Leistungsempfangsmodul (26) ist mit der zumindest einen wiederaufladbaren Batterie (22) elektrisch verbunden, um die zumindest eine wiederaufladbare Batterie (22) zu laden.

4. Das drahtlose Leistungsversorgungs- und elektrische Steuersystem (1) gemäß Anspruch 3, bei dem das Leistungsübertragungsmodul (25) einen Stromimpulsgenerator (252), einen Leistungsverstärker (254) und eine Sendespule (256) aufweist; während die externe Leistungsquelle (21) dem Leistungsübertragungsmodul (25) einen Gleichstrom zuführt, gelangt der Gleichstrom nacheinander durch den Stromimpulsgenerator (252), den Leistungsverstärker (254) und die Sendespule (256), wodurch die Sendespule (256) ein Magnetfeld erzeugt; das Leistungsempfangsmodul (26) eine Empfangsspule (262) und ein Gleichrichterfilter (264) aufweist; wenn die Sendespule (256) das Magnetfeld erzeugt und wenn sich die Empfangsspule (262) an die Sendespule (256) annähert, erzeugt die Empfangsspule (262) einen induzierten Strom, der durch das Gleichrichterfilter (264) gelangt und anschließend der zumindest einen wiederaufladbaren Batterie (22) Leistung zuführt.

5. Das drahtlose Leistungsversorgungs- und elektrische Steuersystem (1) gemäß Anspruch 4, bei dem das Leistungsübertragungsmodul (25) einen Stromdetektor (257), einen Spannungsverstärker (258) und ein Gleichrichterfilter (259) aufweist; der Gleichstrom, der durch die Sendespule (256) gelangt, gelangt parallel durch den Stromdetektor (257) und gelangt anschließend nacheinander durch den Spannungsverstärker (258) und das Gleichrichterfilter (259), und schließlich wird ein Übertragungsspannungswert erhalten; falls der Übertragungsspannungswert größer ist als ein Referenzspannungswert, wird die zumindest eine wiederaufladbare Batterie (22) geladen; falls der Übertragungsspannungswert geringer als der oder gleich dem Referenzspannungswert ist, wurde die zumindest eine wiederaufladbare Batterie (22) geladen oder es liegt zwischen der Empfangsspule (262) und der Sendespule (256) keine elektromagnetische Induktion vor.

6. Das drahtlose Leistungsversorgungs- und elektrische Steuersystem (1) gemäß Anspruch 5, bei dem in dem Fall, dass der Übertragungsspannungswert geringer als der oder gleich dem Referenzspannungswert ist, das Leistungsübertragungsmodul (25) den Strom automatisch ausschaltet.

7. Das drahtlose Leistungsversorgungs- und elektrische Steuersystem (1) gemäß Anspruch 5, bei dem das Leistungsübertragungsmodul (25) eine Kontrolllampe aufweist; falls der Übertragungsspannungswert größer ist als der Referenzspannungswert, zeigt die Kontrolllampe ein erstes Lichtsignal; falls der Übertragungsspannungswert geringer als der oder gleich dem Referenzspannungswert ist, zeigt die Kontrolllampe ein zweites Lichtsignal, das sich von dem ersten Lichtsignal unterscheidet.

8. Das drahtlose Leistungsversorgungs- und elektrische Steuersystem (1) gemäß Anspruch 4, bei dem die Sendespule (256) in einer Wand (W) vorgesehen ist, während die Empfangsspule (262) in der Abdeckung (54) der Sitzabdeckungsanordnung (5) vorgesehen ist; wenn sich die Abdeckung (54) relativ zu dem Sitz (52) in dem angehobenen Zustand befindet, sind die Empfangsspule (262) und die Sendespule (256) nahe beieinander, wodurch die Empfangsspule (262) den induzierten Strom erzeugt, um die zumindest eine wiederaufladbare Batterie (22) zu laden.

9. Das drahtlose Leistungsversorgungs- und elektrische Steuersystem (1) gemäß Anspruch 4, bei dem die Sendespule (256) in einer tragbaren drahtlosen Ladevorrichtung (P) vorgesehen ist, während die Empfangsspule (262) in der Abdeckung (54) der Sitzabdeckungsanordnung (5) vorgesehen ist; wenn sich die Abdeckung (54) relativ zu dem Sitz (52) in dem geschlossenen Zustand befindet, kann die tragbare drahtlose Ladevorrichtung (P) auf der Abdeckung (54) platziert werden, wodurch die Empfangsspule (262) und die Sendespule (256) nahe zusammengebracht werden, um den induzierten Strom zu erzeugen, der die zumindest eine wiederaufladbare Batterie (22) auflädt.

10. Das drahtlose Leistungsversorgungs- und elektrische Steuersystem (1) gemäß Anspruch 1, bei dem die Gleichstrom-Leistungsversorgungsvorrichtung (20) eine Leistungsverteilungseinheit (28) aufweist, die mit der elektrischen Steuereinheit (12) und der zumindest einen elektrischen Anordnung (14) der elektrischen Vorrichtung (10) elektrisch verbunden ist, um der elektrischen Steuereinheit (12) und der zumindest einen elektrischen Anordnung (14) Gleichstrom zuzuführen.

## Revendications

1. Système d'alimentation sans fil et de commande électrique pour un couvercle de siège de toilettes (1) comprenant :
un ensemble couvercle de siège (5) comprenant un siège (52) et un couvercle (54) qui peut être commandé pour se déplacer de manière pivotante par rapport au siège (52) de sorte que le couvercle (54) est dans un état fermé ou dans un état levé par rapport au siège (52), dans lequel lorsque le couvercle (54) est dans l'état fermé par rapport au siège (52), le couvercle (54) recouvre le siège (52), tandis que lorsque le couvercle (54) est dans l'état levé par rapport au siège (52), le couvercle (54) ne recouvre pas le siège (52) de sorte que le siège (52) est exposé ;
un dispositif électrique (10) qui est fourni dans l'ensemble couvercle de siège (5), dans lequel le dispositif électrique (10) comprend une unité de commande électrique (12) et au moins un ensemble électrique (14) ; l'unité de commande électrique (12) est adaptée pour transmettre un signal de commande électrique à l'au moins un ensemble électrique (14) pour actionner l'au moins un ensemble électrique (14) ; et
un dispositif d'alimentation en courant continu (20) qui est fourni dans l'ensemble couvercle de siège (5) et est électriquement connecté au dispositif électrique (10), dans lequel le dispositif d'alimentation en courant continu (20) comprend au moins une batterie rechargeable (22) qui est adaptée pour alimenter le dispositif électrique (10) pour le fonctionnement ;
dans lequel l'ensemble couvercle de siège (5) comprend un corps principal de couvercle (56), et l'au moins une batterie rechargeable (22) est fournie de manière amovible dans le corps principal de couvercle (56) ;
dans lequel le corps principal de couvercle (56) comprend un compartiment de batterie (562) pour accueillir l'au moins une batterie rechargeable (22) de sorte que l'au moins une batterie rechargeable (22) est installée de manière amovible dans le compartiment de batterie (562) ;
dans lequel l'au moins une batterie rechargeable (22) comprend une bague (222) étanche à l'eau fournie autour d'une surface externe de l'au moins une batterie rechargeable (22) ; lorsque l'au moins une batterie rechargeable (22) est installée dans le compartiment de batterie (562), la bague (222) étanche à l'eau est prise en sandwich entre la surface externe de l'au moins une batterie rechargeable (22) et une paroi interne du compartiment de batterie (562).

2. Système d'alimentation sans fil et de commande électrique (1) selon la revendication 1, dans lequel le compartiment de batterie (562) a une gorge de drainage (564) fournie autour d'un bord supérieur du compartiment de batterie (562) pour empêcher l'eau d'entrer dans le compartiment de batterie (562).

3. Système d'alimentation sans fil et de commande électrique (1) selon la revendication 1, dans lequel le dispositif d'alimentation en courant continu (20) comprend un élément de charge sans fil (24) qui comprend un module de transmission de puissance (25) et un module de réception de puissance (26) ; le module de transmission de puissance (25) et le module de réception de puissance (26) sont connectés au travers d'un signal électromagnétique ; lorsque le module de transmission de puissance (25) est électriquement connecté à une source de puissance extérieure (21), le module de transmission de puissance (25) est adapté pour transmettre un signal électromagnétique au module de réception de puissance (26) ; le module de réception de puissance (26) est électriquement connecté à l'au moins une batterie rechargeable (22) pour charger l'au moins une batterie rechargeable (22).

4. Système d'alimentation sans fil et de commande électrique (1) selon la revendication 3, dans lequel le module de transmission de puissance (25) comprend un générateur d'impulsions de courant (252), un amplificateur de puissance (254) et une bobine de transmission (256) ; pendant que la source de puissance extérieure (21) alimente le module de transmission de puissance (25) en courant continu, le courant continu passe à travers le générateur d'impulsions de courant (252), l'amplificateur de puissance (254) et la bobine de transmission (256) de manière séquentielle, ce qui amène la bobine de transmission (256) à générer un champ magnétique ; le module de réception de puissance (26) comprend une bobine de réception (262) et un filtre redresseur (264) ; lorsque la bobine de transmission (256) génère le champ magnétique, et lorsque la bobine de réception (262) approche de la bobine de transmission (256), la bobine de réception (262) génère un courant induit qui passe à travers le filtre redresseur (264) et alimente ensuite l'au moins une batterie rechargeable (22).

5. Système d'alimentation sans fil et de commande électrique (1) selon la revendication 4, dans lequel module de transmission de puissance (25) comprend un détecteur de courant (257), un amplificateur de tension (258) et un filtre redresseur (259) ; le courant continu qui passe à travers la bobine de transmission (256) passe à travers le détecteur de courant (257) en parallèle, et passe ensuite à travers l'amplificateur de tension (258) et le filtre redresseur (259) séquentiellement, et enfin une valeur de tension de transmission est obtenue ; si la valeur de tension de transmission est supérieure à une valeur de tension de référence, l'au moins une batterie rechargeable (22) est chargée ; si la valeur de tension de transmission est inférieure ou égale à la valeur de tension de référence, l'au moins une batterie rechargeable (22) a été chargée, ou il n'existe pas d'induction électromagnétique entre la bobine de réception (262) et la bobine de transmission (256).

6. Système d'alimentation sans fil et de commande électrique (1) selon la revendication 5, dans lequel si la valeur de tension de transmission est inférieure ou égale à la valeur de tension de référence, le module de transmission de puissance (25) coupe automatiquement le courant.

7. Système d'alimentation sans fil et de commande électrique (1) selon la revendication 5, dans lequel le module de transmission de puissance (25) comprend une lumière pilote; si la valeur de tension de transmission est supérieure à la valeur de tension de référence, la lumière pilote montre un premier signal lumineux ; si la valeur de tension de transmission est inférieure ou égale à la valeur de tension de référence, la lumière pilote montre un second signal lumineux qui est différent du premier signal lumineux.

8. Système d'alimentation sans fil et de commande électrique (1) selon la revendication 4, dans lequel la bobine de transmission (256) est fournie dans une paroi (W), tandis que la bobine de réception (262) est fournie dans le couvercle (54) de l'ensemble couvercle de siège (5) ; lorsque le couvercle (54) est dans l'état levé par rapport au siège (52), la bobine de réception (262) et la bobine de transmission (256) sont proches l'une de l'autre, ce qui amène la bobine de réception (262) à générer le courant induit pour charger l'au moins une batterie rechargeable (22).

9. Système d'alimentation sans fil et de commande électrique (1) selon la revendication 4, dans lequel la bobine de transmission (256) est fournie dans un dispositif de charge sans fil portable (P), tandis que la bobine de réception (262) est fournie dans le couvercle (54) de l'ensemble couvercle de siège (5) ; lorsque le couvercle (54) est dans l'état fermé par rapport au siège (52), le dispositif de charge sans fil portable (P) peut être placé sur le couvercle (54), amenant la bobine de réception (262) et la bobine de transmission (256) à proximité l'une de l'autre pour générer le courant induit, qui charge l'au moins une batterie rechargeable (22).

10. Système d'alimentation sans fil et de commande électrique (1) selon la revendication 1, dans lequel le dispositif d'alimentation en courant continu (20) comprend une unité de distribution de puissance (28) qui est électriquement connectée à l'unité de commande électrique (12) et à l'au moins un ensemble électrique (14) du dispositif électrique (10) pour alimenter l'unité de commande électrique (12) et l'au moins un ensemble électrique (14) en courant continu.
